# FASCICULE DE BREVET EUROPEEN

(11) **EP 2 684 274 B1**
(45) Date de publication et mention de la délivrance du brevet: **04.05.2022**
(21) Numéro de dépôt: 12708812.8
(22) Date de dépôt: 07.03.2012
(51) Int. Cl.: H02J 7/00, B60L 58/18, B60L 58/22, H02J 1/08, H02J 7/34

(54) **SYSTEME D'EQUILIBRAGE DE CHARGE POUR BATTERIES**
LADUNGSAUSGLEICHSSYSTEME FÜR BATTERIEN
CHARGE BALANCING SYSTEM FOR BATTERIES

(30) Priorité: 09.03.2011 FR 1151923
(43) Date de publication de la demande: 15.01.2014
(73) Titulaire: Commissariat à l'Énergie Atomique et aux Énergies Alternatives, 75015 Paris (FR)
(72) Inventeur: GARNIER, Laurent, F-69970 Marennes (FR); CHATROUX, Daniel, F-38470 Teche (FR); DESBOIS-RENAUDIN, Matthieu, F-38250 Villard de Lans (FR)
(74) Mandataire: Croonenbroek, Thomas Jakob
(86) Numéro de dépôt international: PCT/EP2012/053880
(87) Numéro de publication internationale: WO 2012/120030

(56) Documents cités:
- WO-A1-2008/137764
- JP-A- 2009 044 802
- US-A- 6 111 388
- US-A1- 2002 074 985
- US-A1- 2002 167 291
- US-A1- 2004 027 092
- US-A1- 2008 116 850
- US-A1- 2009 278 496
- US-A1- 2010 117 593
- US-B1- 6 281 662

## Description

L'invention concerne un système d'équilibrage de charge pour batterie.

L'invention est relative à une batterie pouvant être utilisée notamment dans le domaine des transports électriques, hybrides et les systèmes embarqués. L'invention concerne en particulier les batteries de type lithium-ion (Li-ion) adaptées pour ce genre d'applications, du fait de leur possibilité de stocker une forte énergie avec une faible masse. L'invention est également applicable aux super-condensateurs.

Un accumulateur électrochimique a une tension nominale de l'ordre de quelques volts, et plus précisément 3.3 V pour les batteries Li-ion à base de phosphate de Fer et 4.2 V pour une technologie Li-ion à base d'oxyde de cobalt.

Si cette tension est trop faible par rapport aux exigences du système à alimenter, plusieurs accumulateurs sont placés en série.

Il est également possible de disposer en parallèle de chaque accumulateur associé en série, un ou des accumulateurs afin d'augmenter la capacité disponible et donc de fournir un courant et une puissance supérieurs. Les accumulateurs associés en parallèle forment ainsi un étage. Un étage est constitué au minimum d'un accumulateur. Les étages sont mis en série pour atteindre le niveau de tension désiré.

L'association des accumulateurs est appelée une batterie d'accumulateurs.

La charge ou décharge d'un accumulateur se traduit respectivement par une croissance ou décroissance de la tension à ses bornes. On considère un accumulateur chargé ou déchargé lorsque celui-ci a atteint un niveau de tension défini par le processus électrochimique.

Dans un circuit utilisant plusieurs étages d'accumulateurs, le courant circulant à travers les étages est le même.

Le niveau de charge ou de décharge des étages dépend donc des caractéristiques intrinsèques des accumulateurs, à savoir la capacité intrinsèque et les résistances internes parasites séries et parallèles, de l'électrolyte ou de contact entre les électrodes et l'électrolyte. Des différences de tension entre les étages sont dès lors possibles du fait des disparités de fabrication et de vieillissement des accumulateurs.

Pour un accumulateur de technologie Li-ion, une tension trop élevée ou trop faible, dite tension de seuil, peut endommager ou détruire ce dernier.

Par exemple, la surcharge d'un accumulateur Li-ion à base d'oxyde de Cobalt, peut entraîner son emballement thermique et un départ de feu. Pour un accumulateur Li-ion à base de phosphate, une surcharge se traduit par une décomposition de l'électrolyte qui diminue sa durée de vie ou peut détériorer l'accumulateur.

Une décharge trop profonde qui amène à une tension inférieure à 2 V, par exemple, entraine entre autres une oxydation du collecteur de courant de l'électrode négative lorsque celui-ci est en cuivre et donc une détérioration de l'accumulateur.

En conséquence, la surveillance des tensions aux bornes de chaque étage d'accumulateurs est donc nécessaire lors de la charge et décharge pour une question de sécurité et de fiabilité. L'information peut ensuite être transmise à un circuit de contrôle afin d'arrêter la charge ou la décharge de la batterie lorsqu'un étage a atteint sa tension de seuil.

Cependant, sur une batterie avec plusieurs étages d'accumulateurs disposés en série, si la charge est arrêtée lorsque l'étage le plus chargé atteint sa tension de seuil, les autres étages peuvent ne pas être totalement chargés. Inversement, si la décharge est arrêtée lorsque l'étage le plus déchargé atteint sa tension de seuil, les autres étages peuvent ne pas être totalement déchargés. La charge de chaque étage d'accumulateurs n'est dès lors pas exploitée, ce qui représente un problème majeur dans des applications de types transports et embarqués ayant de fortes contraintes d'autonomie.

Selon des solutions connues des systèmes d'équilibrage, par exemple dits à dissipation d'énergie, ou dits à transfert d'énergie, ont pour fonction d'optimiser la charge de la batterie et donc son autonomie en amenant les étages d'accumulateurs mis en série à un état de charge et/ou décharge identique.

Avec les systèmes d'équilibrage à dissipation d'énergie, la tension aux bornes des étages est uniformisée en détournant le courant de charge d'un ou des étages ayant atteint la tension de seuil et en dissipant l'énergie dans une résistance. En variante, la tension aux bornes des étages est uniformisée en déchargeant un ou des étages ayant atteint la tension de seuil.

Cependant, de tels systèmes d'équilibrage à dissipation d'énergie présentent l'inconvénient majeur de consommer plus d'énergie que nécessaire pour charger la batterie. En effet, il faut décharger plusieurs accumulateurs ou dériver le courant de charge de plusieurs accumulateurs pour que le ou les derniers accumulateurs un peu moins chargés terminent leur charge. L'énergie dissipée peut donc être très supérieure à l'énergie de la ou des charges devant être terminées.

De plus, ils dissipent l'énergie excédentaire en chaleur, ce qui n'est pas compatible avec les contraintes d'intégration dans les applications de types transport et embarquées, et le fait que la durée de vie des accumulateurs baisse fortement lorsque la température s'élève.

Les systèmes d'équilibrage à transfert d'énergie quant à eux échangent de l'énergie entre la batterie d'accumulateurs ou un réseau auxiliaire d'énergie et les étages d'accumulateurs.

Le transfert d'énergie peut s'effectuer soit de manière unidirectionnelle, de la batterie aux étages ou des étages à la batterie, ou soit de manière bidirectionnelle, de la batterie aux étages et des étages à la batterie ou d'étage à étage adjacents.

En ce qui concerne le transfert bidirectionnel, dans les systèmes d'équilibrage d'étage à étage adjacents, l'énergie parcourt un nombre de dispositifs sensiblement égal à l'éloignement des accumulateurs à équilibrer. En résulte les deux inconvénients majeurs de ces dispositifs, à savoir la nécessité d'un temps long pour équilibrer une batterie et le faible rendement du transfert d'énergie à cause du cumul des pertes des dispositifs sollicités.

En ce qui concerne le transfert unidirectionnel, selon une solution connue, la fin de charge d'une batterie est déterminée par le dernier étage qui atteint la tension de seuil. Pour terminer la charge d'une batterie, l'énergie est prélevée sur un ou plusieurs étage(s) et elle est restituée à l'ensemble des étages. Lorsqu'un ou plusieurs étage(s) d'accumulateurs est ou sont un peu moins chargé(s), l'énergie n'est dès lors pas transférée en priorité à ce ou ces derniers qui en a ou ont besoin mais également à ou aux étages auxquels l'énergie est prélevée. L'équilibrage nécessite donc de prélever de l'énergie à l'ensemble des étages en fin de charge afin d'éviter de les charger à une tension trop élevée. L'équilibrage se fait donc à pertes élevées à cause du nombre de convertisseurs importants en fonctionnement. De plus, les accumulateurs déjà en fin de charge sont traversés par des composantes de courant alternatives ou continues non utiles. Des exemples de systèmes d'équilibrage sont montrés dans JP2009044802A et US2010117593.

L'invention a donc pour objectif de proposer un système d'équilibrage amélioré ne présentant pas ces inconvénients de l'état de l'art de la technique.

À cet effet, l'invention a pour objet un système d'équilibrage de charge pour batterie de puissance comme défini dans la revendication indépendante 1.

Des modes de réalisation de l'invention sont définis dans les revendications dépendantes.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente de façon schématique un mode de réalisation d'un système d'équilibrage pour batterie de puissance, par transfert d'énergie entre la batterie de puissance et un réseau auxiliaire qui n'est pas couvert par l'invention,
- la figure 2 illustre un exemple de batterie de puissance comportant quatre modules d'étages d'accumulateur(s) et le système d'équilibrage de la figure 1,
- la figure 3 représente de façon partielle une batterie de puissance et un système d'équilibrage de la batterie de puissance présentant des convertisseurs bidirectionnels aux bornes de modules de la batterie de puissance,
- la figure 4 représente partiellement et de façon schématique un convertisseur bidirectionnel ainsi qu'un dispositif de protection en cas de court-circuit,
- la figure 5a représente une variante de réalisation du commutateur du dispositif de protection de la figure 4,
- la figure 5b représente une autre variante de réalisation du commutateur du dispositif de protection de la figure 4,
- la figure 6 est un tableau schématique illustratif représentant un classement des niveaux de tension des modules afin de définir un équilibrage inter-modules,
- la figure 7a représente de façon schématique une batterie de puissance comportant au moins un module d'étages d'accumulateur(s), un système d'équilibrage de la batterie de puissance et une batterie auxiliaire,
- la figure 7b représente la batterie de la figure 7a avec un système d'équilibrage comprenant deux convertisseurs monodirectionnels aux bornes d'un module de la batterie selon un exemple de réalisation,
- la figure 8 représente de façon partielle et schématique un exemple de réalisation d'un système d'équilibrage de la batterie de puissance présentant deux convertisseurs monodirectionnels aux bornes d'un module de la batterie avec un exemple de réalisation d'un dispositif de charge aux bornes d'un étage de la batterie,
- la figure 9 représente partiellement et de façon schématique un premier et un deuxième convertisseur ainsi qu'un dispositif de protection en cas de court-circuit,
- la figure 10 représente partiellement et de façon schématique un premier et un deuxième convertisseur ainsi qu'un dispositif de protection en cas de court-circuit selon une variante de réalisation, et
- la figure 11 représente partiellement et de façon schématique un premier et un deuxième convertisseurs ainsi qu'un dispositif de protection en cas de court-circuit selon une autre variante de réalisation.

Dans ces figures et dans la suite de la description, les éléments sensiblement identiques portent les mêmes références.

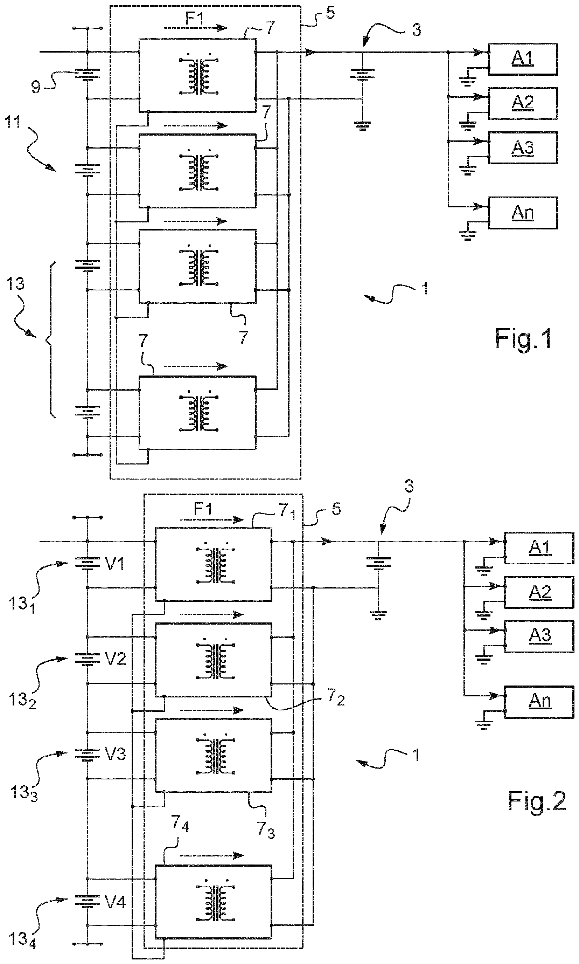

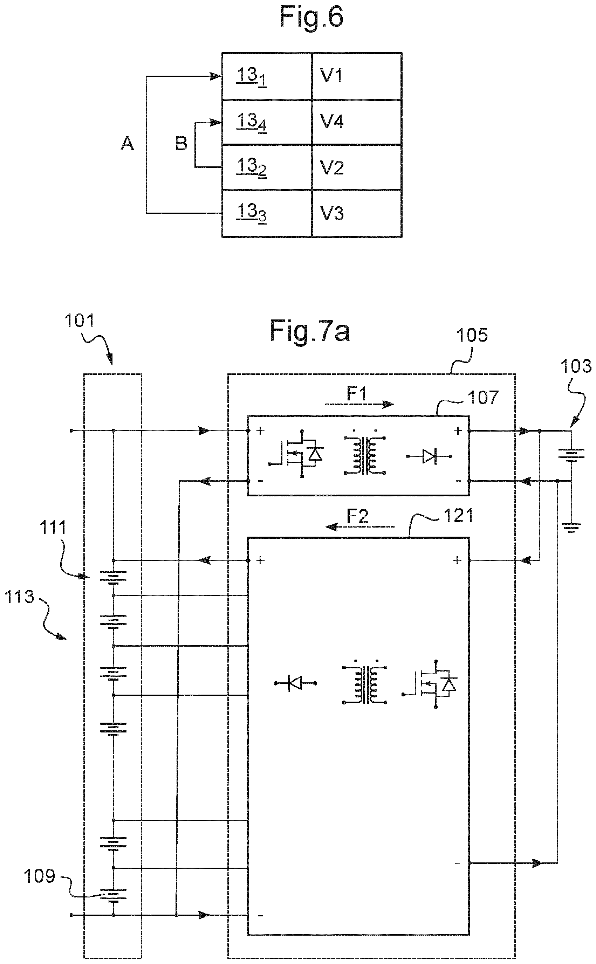

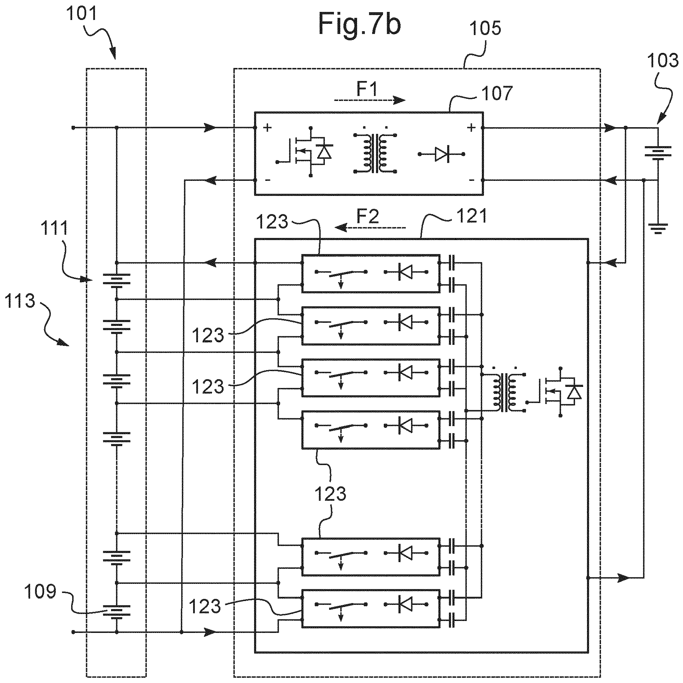

On a représenté de façon schématique sur les figures 1 à 6 un premier mode de réalisation qui n'est pas couvert par l'invention, et sur les figures 7 à 11 un deuxième mode de réalisation selon l'invention.

Les éléments décrits du deuxième mode de réalisation sensiblement identiques à des éléments du premier mode de réalisation, portent les mêmes références que ces éléments du premier mode de réalisation précédées de la centaine 1.

### Premier mode de réalisation

On décrit le premier mode de réalisation qui n'est pas couvert par l'invention en se référant à la figure 1 sur laquelle on a illustré :
- une batterie de puissance 1 de tension élevée comprise par exemple entre 48V et 750V, par exemple pour l'alimentation du moteur d'un véhicule hybride ou électrique, et isolée du châssis du véhicule,
- une batterie auxiliaire 3 de tension inférieure à celle de la batterie de puissance 1, par exemple de tension de 12V, pour l'alimentation par exemple des auxiliaires A1 à An dans le véhicule, et
- un système d'équilibrage 5 pour la batterie de puissance 1, comprenant une pluralité de convertisseurs 7 montés en parallèle entre les deux batteries 1 et 3 pour permettre l'alimentation de la batterie auxiliaire 3 par la batterie de puissance 1. Chaque convertisseur 7 est réalisé avec une isolation galvanique pour assurer la sécurité des auxiliaires A1 à An.

Les convertisseurs 7 sont illustrés de façon schématique.

La batterie de puissance 1 est une batterie d'accumulateur(s) 9. Cette batterie 1 peut comporter plusieurs accumulateurs 9 mis en série.

Cette batterie 1 peut également comporter un ou plusieurs accumulateurs supplémentaires placés en parallèle des accumulateurs 9 en série de façon à former des étages d'accumulateur(s) 11. Chaque étage 11 peut donc comporter un accumulateur 9 ou plusieurs accumulateurs 9 connectés en parallèle.

La batterie 1 peut comporter plusieurs modules 13 mis en série, chaque module 13 comportant un nombre prédéfini d'étages 11 d'accumulateurs.

On peut prévoir à titre d'exemple illustratif, une batterie de 19,6kWh de tension de 325V et de capacité de 60Ah. Cette batterie 1 comprend par exemple huit modules 13, chaque module 13 comprenant douze étages 11 d'accumulateurs. Chaque module 13 a donc une tension de 40,6V.

Avec une telle association en série de modules 13, on peut aisément remplacer un module 13 défectueux.

De plus, selon une variante non illustrée, chaque module 13 peut encore être connecté en parallèle d'un autre module 13.

Un convertisseur 7 peut être connecté aux bornes d'un accumulateur 9, ou aux bornes d'un étage d'accumulateur(s) 11, ou encore aux bornes d'un module 13 d'étages d'accumulateurs.

La pluralité de convertisseurs 7 remplace l'unique convertisseur DC/DC connu de l'art antérieur connecté aux bornes de la batterie.

Ces convertisseurs 7 assurent en outre une fonction d'équilibrage de la batterie de puissance.

Le dimensionnement des convertisseurs 7 du système d'équilibrage 5 est adapté pour un tel transfert d'énergie de la batterie de puissance 1 vers la batterie auxiliaire 3.

À titre d'exemple, pour une batterie 1 tel que définie ci-dessus avec huit modules 13 de douze étages 11 d'accumulateurs chacun, on peut prévoir huit convertisseurs 7 de tension 40,6V/12V aux bornes des huit modules 13. Les convertisseurs 7 sont donc dimensionnés pour un transfert d'énergie depuis un module 13 de tension 40,6V vers le réseau basse tension 12V.

De plus, la pluralité de convertisseurs 7 sont des convertisseurs de plus faible puissance, par rapport à un unique convertisseur de l'art antérieur. En effet, par exemple pour une puissance globale de 1kW au niveau du réseau basse tension, chaque convertisseur 7 est de 125W.

Ainsi, avec une seule électronique, le système d'équilibrage 5, l'énergie des accumulateurs 9 de la batterie de puissance 1 est transférée vers la batterie auxiliaire 3, et c'est cette énergie transférée vers le réseau auxiliaire qui sert à équilibrer les accumulateurs 9 de la batterie de puissance 1 et qui sert également à alimenter le réseau basse tension.

Le système d'équilibrage 5 assure donc en plus de la fonction d'équilibrage, la fonction de fourniture du 12 volts accessoire au véhicule.

Par ailleurs, du fait de la pluralité de convertisseurs 7 présents, la batterie 12V peut être supprimée. En effet, la redondance des convertisseurs 7 assure une disponibilité des convertisseurs 7.

Ainsi, même en cas de panne d'un convertisseur 7, les autres convertisseurs 7 fonctionnels peuvent garantir l'alimentation du réseau basse tension.

Selon une variante de réalisation, on peut utiliser des convertisseurs 7 commandés en mode marche/arrêt, selon les besoins en courant des accessoires.

Ainsi, l'équilibrage peut être réalisé en mettant en marche le (respectivement les) convertisseur(s) 7 aux bornes du (respectivement des) module(s) 13 ayant le plus d'énergie, plus précisément présentant une tension plus élevée, que les autres modules 13. La mise en marche du (des) convertisseur(s) 7 permet de décharger partiellement ce(s) module(s) plus chargé(s) en transférant l'énergie vers le réseau basse tension de 12V.

Bien entendu, on peut envisager d'autres convertisseurs 7 comme par exemple des convertisseurs flyback.

En outre, dans le cas où les modules 13 ne présentent pas tous le même état d'usure, par exemple suite au remplacement d'un ou plusieurs modules 13, on peut privilégier l'utilisation du ou des module(s) 13 neuf(s) à l'utilisation des modules 13 plus anciens.

Afin d'illustrer le principe d'équilibrage inter-modules 13, on se réfère à la figure 2 représentant quatre modules 13₁ à 13₄ de tension respective V₁,V₂,V₃,V₄ et respectivement associés à un convertisseur 7₁,7₂,7₃,7₄.

À titre d'exemple, on se place dans la situation dans laquelle :
- le premier module 13₁ présente une tension V₁ de 2,6V,
- le deuxième module 13₂ présente une tension V₂ de 3,3V,
- le troisième module 13₃ présente une tension V₃ de 3,4V, et
- le quatrième module 13₄ présente une tension V₄ de 2,8V.

Les deuxième et troisième modules 13₂ et 13₃ présentent respectivement une tension de 3,3V, et de 3,4V, et sont donc les plus chargés. Les convertisseurs 7₂ et 7₃ respectivement associés à ces deuxième et troisième modules 13₂ et 13₃ les plus chargés, sont mis en marche afin de les décharger partiellement.

L'énergie d'équilibrage des modules 13 est donc transférée, dans un premier sens comme l'illustre la flèche F1, via les convertisseurs 7 au réseau basse tension 12V, et cette énergie permet d'alimenter les auxiliaires A1 à An du véhicule.

De plus, pendant cette décharge si la consommation sur le réseau basse tension est insuffisante, par exemple parce que le véhicule est à l'arrêt, des consommateurs additionnels peuvent être mis en route pour augmenter la consommation sur le 12V, tel que le chauffage, la climatisation.

La description est faite ici pour un équilibrage entre modules 13, bien entendu, l'équilibrage peut se faire de façon similaire entre étages 11 d'accumulateur(s) grâce à une pluralité de convertisseurs 7 respectivement connectés aux bornes d'un étage 11 d'accumulateur(s).

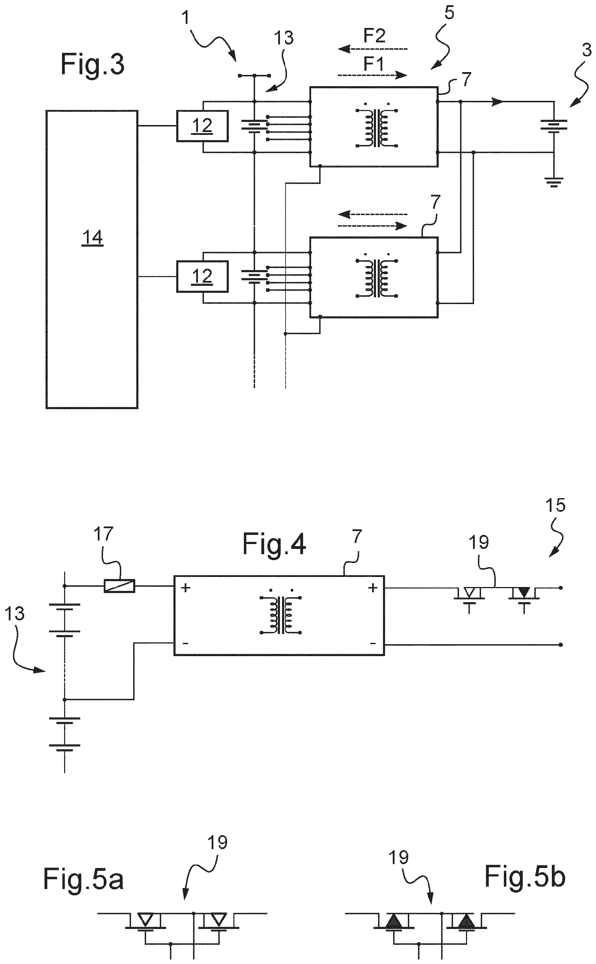

Le système d'équilibrage 5 peut comporter de plus (cf figure 3) un dispositif de mesure de tension 12 pour mesurer la tension de chaque étage 11 ou module 13, et pour transférer une information de tension à une unité de commande 14.

Cette unité de commande 14 peut à partir de cette information de tension déterminer si un étage 11 ou un module 13 doit être déchargé et commander en conséquence la mise en marche du convertisseur 7 en parallèle pour équilibrer les modules 13 en transférant l'énergie vers le réseau basse tension.

À cet effet, l'unité de commande 14 comporte au moins un moyen de traitement pour :
- recevoir les informations de tension,
- analyser les informations de tension,
- déterminer un ou plusieurs étages 11 à décharger, et
- commander un ou plusieurs convertisseurs 7 en parallèle desdits étages 11 déterminés.

### Système d'équilibrage bidirectionnel

En outre, le système d'équilibrage 5 peut être bidirectionnel.

L'énergie est alors transmise dans les deux sens (cf figure 3), c'est-à-dire :
- de la batterie de puissance 1 vers le réseau basse tension pour alimenter les auxiliaires A1 à An, dans un premier sens comme l'illustre la flèche F1, et
- du réseau d'auxiliaires vers la batterie de puissance 1, dans un deuxième sens comme l'illustre la flèche F2.

L'équilibrage peut donc se faire à la décharge ou à la charge des étages 11 d'accumulateur(s).

Comme l'illustre la figure 3, on peut pour cela prévoir selon le premier mode de réalisation un seul convertisseur 7 bidirectionnel en courant qui permet d'une part de décharger les modules 13 les plus chargés en utilisant l'énergie d'équilibrage pour alimenter le réseau basse tension, et d'autre part de charger les étages 11 des modules 13 à partir du réseau basse tension.

On peut ainsi équilibrer les étages 11 des modules 13 sans nécessité d'alimentation extérieure.

De plus, avec cette solution, l'équilibrage peut se faire même sans consommation sur le réseau basse tension 12V. En effet, l'énergie d'équilibrage déchargée dans le premier sens F1 peut alors être renvoyée vers les étages 11 d'accumulateur(s) dans le deuxième sens F2.

La batterie auxiliaire 3 peut être supprimée d'autant plus car elle perd la fonction de tampon d'énergie.

On obtient alors un module autonome pour son propre équilibrage.

Cet équilibrage peut permettre de remédier aux disparités des niveaux de charge des différents étages 11, pendant ou suite à la charge de la batterie de puissance 1 mais aussi pendant ou suite à une décharge de la batterie de puissance 1.

Par ailleurs, comme l'illustre la figure 4, on peut prévoir un dispositif de protection 15 contre les court-circuits.

À cet effet, le dispositif de protection 15 peut comporter :
- un fusible 17 disposé en entrée du convertisseur 7, par exemple au niveau de la borne positive (+) du convertisseur 7, c'est-à-dire dans l'exemple illustré du côté de la batterie de puissance 1, et
- un commutateur 19 en sortie du convertisseur 7, par exemple au niveau de la borne positive (+) du convertisseur 7, c'est-à-dire dans l'exemple illustré du côté du réseau basse tension.

Le fusible 17 permet d'isoler le convertisseur 7 en cas de court-circuit et le commutateur 19 permet au convertisseur 7 de continuer à fonctionner. Le fusible et le commutateur peuvent être placés au niveau des pôles + ou les pôles - des convertisseurs

Selon l'exemple illustré, le commutateur 19 est bidirectionnel en tension et en courant.

Ce commutateur 19 comporte à titre d'exemple deux transistors MOS, un premier de type N et un deuxième de type P, montés en opposition.

Des variantes d'un tel commutateur 19 sont illustrées sur les figures 5a et 5b; la figure 5a présentant une première variante avec deux transistors de type N montés en opposition et la figure 5b représentant une deuxième variante avec deux transistors de type P montés en opposition.

En se référant à nouveau à la figure 4, le commutateur 19 est agencé en sortie du convertisseur 7. Le commutateur 19 peut être agencé au niveau de la borne positive (+) ou au niveau de la borne négative (-) du convertisseur 7.

Selon une alternative au commutateur 19, on peut prévoir une diode 19' en sortie du convertisseur 7 au niveau de la borne positive (+) du convertisseur ou au niveau de la borne négative (-) 7.

On peut ainsi augmenter la disponibilité des convertisseurs 7 bidirectionnels, de façon à pouvoir supprimer la batterie auxiliaire 3 en augmentant la tolérance en cas de défaillance d'un ou plusieurs convertisseurs 7 grâce au dispositif de protection 15.

En effet, du fait de la redondance de la pluralité de convertisseurs 7 et du dispositif de protection 15, même en cas d'un convertisseur 7 défectueux on évite que ledit système d'équilibrage ne court-circuite les autres convertisseurs 7, de sorte qu'on peut continuer à alimenter le réseau basse tension 12V.

### Fonctionnement du système d'équilibrage bidirectionnel

### • Phase de charge de la batterie de puissance

On décrit maintenant un exemple de fonctionnement du système d'équilibrage 5 bidirectionnel pour équilibrer des niveaux de tensions dans le cas de la charge d'une batterie de puissance 1, de façon à amener tous les étages 11 à un niveau de tension nominal.

Cet équilibrage aussi bien entre étages 11 d'un module 13, qu'entre modules 13 peut se faire en même temps que la charge de la batterie 1.

Pour l'équilibrage entre les étages 11 d'un module 13, de l'énergie est prise sur le module 13 (dans le premier sens de circulation du courant F1) puis redistribué (dans le deuxième sens de circulation du courant F2) vers les étages 11 les moins chargés.

Pour définir un ou plusieurs étages à charger, on peut définir un seuil, et lorsque le niveau de tension d'un étage 11 est inférieur à ce seuil, l'énergie est redistribuée vers cet étage 11. Par exemple, on peut prévoir un seuil moyen correspondant à la moyenne des niveaux de tension des étages 11 du module 13.

Ainsi, lorsqu'un étage 11 présente une tension inférieure à la moyenne des niveaux de charge des étages 11 du module 13, l'énergie prise du module 13 est distribuée à cet étage 11.

Pour effectuer cette mesure, le dispositif de mesure de tension 12 peut mesurer la tension de chaque étage 11 et peut transférer une information de tension à l'unité de commande 14.

Cette unité de commande 14 peut à partir de cette information de tension déterminer si un étage 11 doit être chargé, par exemple par comparaison à une moyenne de niveau de charge au sein du module 13, et commander en conséquence la mise en marche du convertisseur 7 en parallèle pour charger le ou les étages 11 déterminé(s).

Et, en ce qui concerne l'équilibrage entre les modules 13, le dispositif de mesure de tension 12 peut être configuré pour mesurer la tension de chaque module 13 et pour transférer une information de tension à l'unité de commande 14 qui peut à partir de cette information de tension déterminer sur quel module 13 on peut tirer de l'énergie pour la réinjecter dans quel module 13.

Le dispositif de mesure 12 peut réaliser ces mesures à un intervalle régulier.

L'unité de commande 14 peut comprendre au moins un moyen de traitement pour analyser les niveaux de tension de chaque module 13 et les classer par exemple par ordre croissant ou décroissant. Les modules 13 les plus chargés servent alors pour recharger les modules 13 les plus déchargés.

Un exemple d'équilibrage peut être de prendre l'énergie du module 13 le plus chargé et de la transférer au module 13 le plus déchargé, de prendre l'énergie du deuxième module le plus chargé et de la transférer au deuxième module le plus déchargé, et ainsi de suite.

Afin d'illustrer ce principe, prenons l'exemple illustré sur la figure 2 représentant quatre modules 13₁ à 13₄ de tension respective V₁,V₂,V₃,V₄ et respectivement associés à un convertisseur 7₁,7₂,7₃,7₄.

À titre d'exemple, on se place dans la situation dans laquelle :
- le premier module 13₁ présente une tension V₁ de 2,6V,
- le deuxième module 13₂ présente une tension V₂ de 3,3V,
- le troisième module 13₃ présente une tension V₃ de 3,4V, et
- le quatrième module 13₄ présente une tension V₄ de 2,8V.

Ces informations peuvent être classées comme l'illustre de façon schématique le tableau de la figure 6, de façon à classer les niveaux de tension par ordre croissant : V₁,V₄,V₂,V₃.

L'unité de commande 14 peut alors commander de charger le premier module 13₁ le moins chargé à partir d'énergie prise du module 13₃ le plus chargé, et de charger le module 13₄ à partir du deuxième module 13₂, comme l'illustre respectivement les flèches A et B.

L'unité de commande 14 peut être configurée pour arrêter le transfert d'énergie d'un module 13 plus chargé vers un module 13 moins chargé lorsque la différence de tension entre les modules est inférieure à une valeur prédéterminée.

### • Phase de décharge de la batterie

On décrit maintenant un exemple de fonctionnement du système d'équilibrage 5 bidirectionnel suite à la décharge de la batterie de puissance 1.

L'équilibrage aussi bien entre étages 11 d'un module 13, qu'entre modules 13 peut aussi se faire en même temps que la décharge de la batterie 1.

Les modules 13 les plus chargés sont utilisés en priorité pour alimenter le réseau basse tension 12V, par exemple lorsque le véhicule dans lequel est intégré la batterie roule. On arrive ainsi en fin de décharge à approcher d'un niveau de tension proche de de la tension minimale autorisée en fin de décharge pour chaque module 13.

Pendant cette décharge, si la consommation sur le réseau 12V est insuffisante des consommateurs additionnels peuvent être mis en route pour augmenter la consommation sur le 12V, tel que le chauffage, la climatisation du véhicule.

Au contraire, si la consommation est trop forte on peut prévoir de limiter le fonctionnement des auxiliaires.

Par exemple lorsque le véhicule est en repos, l'équilibrage se fait en réinjectant l'énergie prise sur le module vers les étages les moins chargés.

L'équilibrage peut aussi se faire du simple fait de la prise d'énergie au niveau du module 13.

### Deuxième mode de réalisation

### Système d'équilibrage à deux convertisseurs monodirectionnels

En se référant à la figure 7a, le deuxième mode de réalisation décrit diffère du premier mode de réalisation en ce que le système d'équilibrage 105 bidirectionnel comporte un premier convertisseur monodirectionnel 107 et un deuxième convertisseur monodirectionnel 121 pour chaque module 113.

Les convertisseurs 107 et 121 sont représentés de façon schématique sur la figure 7a.

Le premier convertisseur 107 est connecté aux bornes du module 113.

En référence à la figure 7b, le deuxième convertisseur 121 comprend un nombre prédéfini de dispositifs de charge 123 respectivement associés à un étage d'accumulateur 111. Les dispositifs de charge 123 sont donc montés en parallèle.

Les dispositifs de charge 123 sont illustrés de façon schématique sur la figure 7b.

On peut ainsi réaliser à la fois un équilibrage entre les modules 113 dans le premier sens de la batterie de puissance 101 vers le réseau basse tension selon la flèche F1, à l'aide des premiers convertisseurs 107, et un équilibrage entre les étages 111 d'accumulateur des modules 113 dans le deuxième sens du réseau basse tension vers la batterie de puissance 101 selon la flèche F2, à l'aide des dispositifs de charge 123 des deuxièmes convertisseurs 121.

Ainsi, les convertisseurs 107 et 121 ne transfèrent pas les mêmes ordres de grandeur de puissance. Chaque convertisseur monodirectionnel 107, 121 est conditionné pour répondre au besoin de puissance qui est propre à chaque convertisseur.

En effet, le premier convertisseur 107 alimente le réseau auxiliaire et équilibre les modules 113 ; une puissance de plusieurs centaines de watt est nécessaire pour assurer cette fonction.

Le second convertisseur 121 équilibre les étages 111 au sein d'un module 113 ; une puissance de quelques dizaines de watt est nécessaire pour assurer cette fonction.

Le rapport entre ces ordres de grandeurs de puissance est d'environ 10.

De plus ces deux fonctions doivent pouvoir être assurées en même temps.

L'emploi de ces deux convertisseurs 107 et 121 aptes à transférer des puissances d'ordre de grandeur différents, et aptes à être utilisés en même temps est préférable à l'utilisation d'un seul convertisseur bidirectionnel.

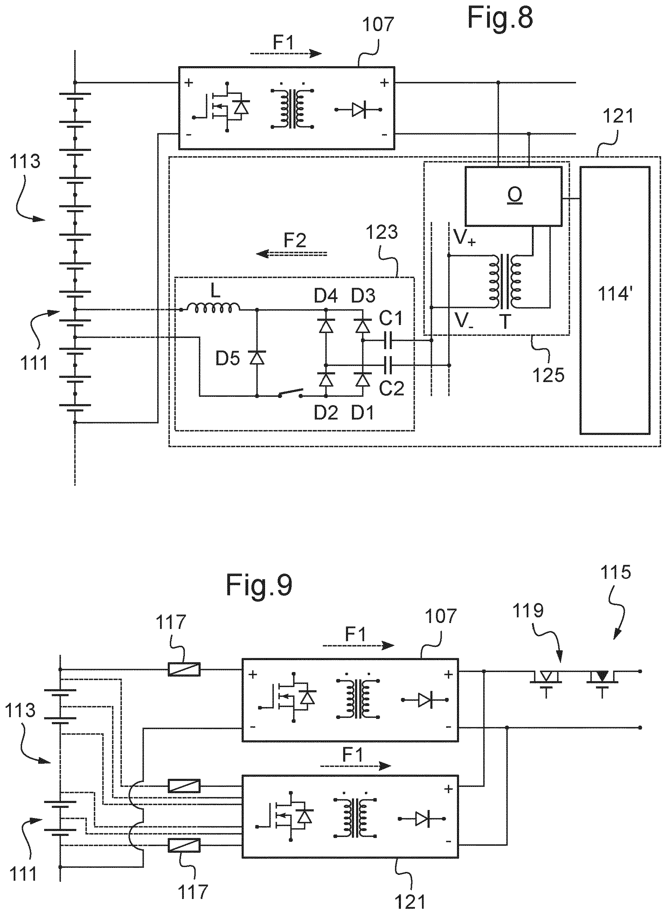

Un exemple de réalisation d'un dispositif de charge 123 est illustré de façon schématique sur la figure 8.

Selon cet exemple de réalisation, un dispositif de charge 123 est connecté d'une part au pôle négatif, noté N, et au pôle positif, noté P, d'un étage 111 d'accumulateur(s) et d'autre part au pôle positif, noté v₊, et au pôle négatif, noté v₋, d'un générateur de tension 125.

Le générateur de tension 125 peut être unique et connecté à l'ensemble des dispositifs de charge 123.

On peut aussi prévoir un générateur de tension 125 par dispositif de charge 123, ou encore un générateur de tension 125 pour plusieurs dispositifs de charge 123.

Un générateur de tension 125 fournit au dispositif de charge 123 des impulsions de tension de polarité(s) positive, négative ou positive et négative et de forme pouvant être variée, par exemple créneau ou sinusoïdale.

Le générateur de tension 125 est commandé par un dispositif de commande (non représenté).

Le générateur de tension 125 peut être connecté aux bornes d'un module 13 ou aux bornes de la batterie 101. .

Ce générateur de tension 125 comporte par exemple un transformateur T et un onduleur O.

L'onduleur O est par exemple commandé en mode marche/arrêt.

Selon l'exemple illustré le transformateur T présente un enroulement primaire et un enroulement secondaire.

On pourrait en variante prévoir un transformateur avec un enroulement primaire et plusieurs enroulements secondaires par exemple respectivement connectés à un module 13.

En outre, le générateur de tension 125 présente un pôle positif v₊ et un pôle négatif v₋.

À titre d'exemple, le dispositif de charge 123 comporte :
- une inductance L avec une première extrémité La et une deuxième extrémité Lb,
- un premier condensateur C1 dont une extrémité est connectée à la première extrémité La de l'inductance L, et dont l'autre extrémité est connectée au pôle négatif v₋ du générateur de tension 125,
- un deuxième condensateur C2 connecté au pôle positif v₊ du générateur de tension 125,
- une première diode D1 dont l'anode et la cathode sont respectivement connectées au pôle N de l'étage 11 associé et à la deuxième extrémité du premier condensateur C1,
- une deuxième diode D2 dont l'anode et la cathode sont respectivement connectées au pôle N de l'étage 11 associé et à la deuxième extrémité du deuxième condensateur C2,
- une troisième diode D3 connectée par sa cathode à la première extrémité La de l'inductance L et par son anode à la cathode de la première diode D1,
- une quatrième diode D4 connectée par sa cathode à la première extrémité La de l'inductance L et par son anode à la cathode de la deuxième diode D2,
- une cinquième diode D5 connectée par sa cathode à la première extrémité La de l'inductance L et par son anode au pôle négatif N de l'étage 11 associé,
- un interrupteur SW, par exemple un transistor MOSFET, connecté d'une part à l'anode de la deuxième diode D2 et d'autre part au pôle négatif N de l'étage associé.

Le dispositif de commande du générateur de tension 125 permet également de fermer et d'ouvrir l'interrupteur SW.

Bien entendu, d'autres typologies pour le dispositif de charge 123 peuvent être envisagées.

De plus, de façon similaire au premier mode de réalisation on peut également prévoir un dispositif de protection 121 contre les court-circuits.

Comme l'illustre la figure 9, à cet effet, le dispositif de protection 115 peut comporter :
- un fusible 117 disposé en entrée du premier convertisseur 107, par exemple au niveau de la borne positive (+) du premier convertisseur 107, et
- un commutateur 119 en sortie du premier convertisseur 107, par exemple au niveau de la borne positive (+) du premier convertisseur 107.

Le fusible 117 et le commutateur 119 sont similaires au fusible 17 et au commutateur 19 décrit précédemment et peuvent de même être placés dans le pôle + ou le pôle -.

On peut également placer un fusible 117 en sortie du deuxième convertisseur 121 sur les lignes d'équilibrage de chaque étage 111 du module 113.

Les termes « entrée » et « sortie » sont définis ici en fonction du sens de circulation du courant. Selon l'exemple décrit, l'entrée du deuxième convertisseur 121 se trouve donc du côté du réseau basse tension 12V et la sortie du côté des étages 111 du module 13.

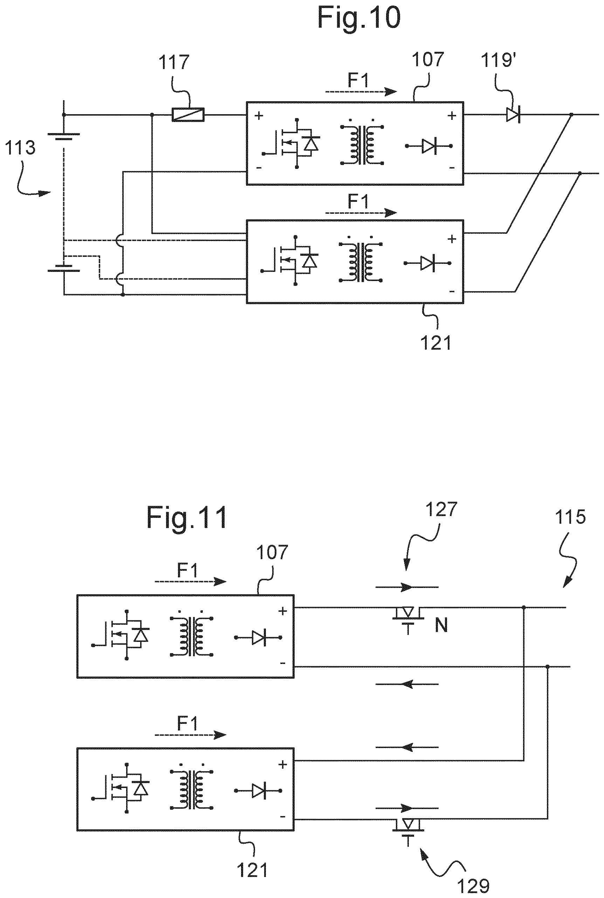

Selon une alternative au commutateur 119, on peut prévoir une diode 119' (figure 10) en sortie du premier convertisseur 107 au niveau de la borne positive (+) du convertisseur 7 ou au niveau de la borne négative (-) du convertisseur 7.

Selon encore une autre variante illustrée sur la figure 11, le dispositif de protection 115 peut comporter en alternative au commutateur 119 :
- un premier commutateur 127 monodirectionnel en sortie du premier convertisseur 107, et
- un deuxième commutateur 129 monodirectionnel en entrée du deuxième convertisseur 121.

Ces deux commutateurs 127,129 sont donc du côté du réseau basse tension 12V.

Par exemple, le premier commutateur 127 est disposé au niveau de la borne positive (+) en sortie du premier convertisseur 107.

Par exemple, le deuxième commutateur 129 est disposé au niveau de la borne négative (-) en entrée du deuxième convertisseur 121.

Ces commutateurs 127,129 peuvent être des transistors MOS de type P ou de type N.

On assure le bon fonctionnement du système d'équilibrage 105 même en cas de défaillance aussi bien d'un premier convertisseur 107 que d'un deuxième convertisseur 121.

### Fonctionnement du système d'équilibrage

Le fonctionnement des premiers convertisseurs 107 pour l'équilibrage entre les modules 113 est similaire au fonctionnement des convertisseurs 7 décrits dans le premier mode de réalisation lorsque l'énergie est prise sur le module 113 (circulation du courant selon la flèche F1) pour être redistribuée aux étages 111, ou encore vers un module 113 moins chargé par exemple en phase de charge de la batterie de puissance 101, ou encore pour alimenter le réseau basse tension, par exemple en phase de décharge de la batterie de puissance 101.

Le fonctionnement des deuxièmes convertisseurs 121 est quant à lui sensiblement similaire au fonctionnement des convertisseurs 7 décrits dans le premier mode de réalisation pour la distribution d'énergie (deuxième sens de circulation F2 du courant) aux étages 111, l'énergie étant prise sur un module 113.

Autrement dit, l'unité de commande des convertisseurs 107,121 est donc configurée pour :
- commander un transfert d'énergie dans le premier sens F1 de la batterie de puissance 101 vers le réseau basse tension via les premiers convertisseurs 107, et pour
- commander un transfert d'énergie dans le deuxième sens F2 du réseau basse tension vers la batterie de puissance 101 via les seconds convertisseurs 121.

Plus précisément, de façon similaire au premier mode de réalisation, pour l'équilibrage entre les étages 111 d'un module 113, de l'énergie est prise sur le module 113 (dans le premier sens de circulation du courant F1) puis redistribué (dans le deuxième sens de circulation du courant F2) vers les étages 111 les moins chargés.

Comme décrit précédemment, l'unité de commande peut à partir d'une information de tension déterminer si un étage 111 doit être chargé, par exemple par comparaison à une moyenne de niveau de charge au sein du module 113, et commander en conséquence la mise en marche d'un second convertisseur 121 en parallèle pour charger le ou les étages 111 à charger déterminé(s).

Et, en ce qui concerne l'équilibrage entre les modules 113, comme décrit précédemment, l'unité de commande 14 peut à partir d'une information de tension déterminer sur quel module 113 on peut tirer de l'énergie pour la réinjecter dans quel module 113.

Cette unité de commande peut donc à partir de cette information de tension déterminer si un module 113 doit être déchargé et commander en conséquence la mise en marche du premier convertisseur 107 en parallèle pour équilibrer les modules 113 en transférant l'énergie dans le premier sens F1 vers le réseau basse tension.

L'unité de commande peut être configurée pour définir au moins un deuxième module 113 à charger, et pour commander au moins un second convertisseur 121 associé au deuxième module 113 pour un transfert de l'énergie dans le deuxième sens F2, de manière à transférer l'énergie du module 113 transférée au premier convertisseur 107 vers le deuxième module 113, via ledit second convertisseur 121.

Plus précisément, on décrit le fonctionnement d'un dispositif de charge 123 lorsque le dispositif de commande 114' commande le transfert d'énergie à un étage 111, l'interrupteur SW du dispositif de charge 123 en parallèle de l'étage 111 correspondant est fermé par le dispositif de commande 114'.

Le générateur de tension 125, alimentant le dispositif de charge 123, est également activé par le dispositif de commande.

Lorsqu'un dispositif de charge 123 est mis en fonctionnement et que le générateur de tension 125 fonctionnait au préalable, la vitesse de fermeture de l'interrupteur SW peut être contrôlée afin d'éviter de fournir un courant trop important à l'étage 111.

Les interrupteurs sont considérés comme parfaits lorsqu'ils sont à l'état bloqué et ne laissent donc passer aucun courant lorsqu'ils sont dans cet état.

Pendant un temps de conduction donné, une tension positive est appliquée entre les bornes du générateur de tension 125. De l'énergie est emmagasinée dans l'inductance L. Le courant à travers l'inductance L croît proportionnellement à la tension appliquée à ses bornes, égale approximativement à la tension du secondaire du transformateur T moins la tension de l'étage 111 en charge.

Le courant traverse uniquement l'étage 111 à charger en parallèle du dispositif de charge 123 activé. Les étages 111 en série avec cet étage 111 à charger ne sont pas chargés tant que l'interrupteur SW des dispositifs de charge 123 en parallèle de ces étages 111 reste à l'état ouvert.

Le courant à travers les condensateurs C1 et C2 du dispositif de charge 123 en fonctionnement est égal au courant à travers l'inductance L. Les condensateurs C1 et C2 sont de valeur suffisamment importante afin de transmettre le courant nécessaire pour imposer une tension quasi-constante aux bornes de l'inductance L.

Pendant ce temps de conduction, la deuxième diode D2 du dispositif de charge 123 conduit et la première diode D1 est bloquée. La quatrième diode D4 est également bloquée.

Le courant est donc emmagasiné dans l'inductance L jusqu'à atteindre une valeur pic, égale approximativement à la tension appliquée aux bornes de l'inductance L lorsque le générateur de tension fournit de l'énergie, multipliée par la valeur du temps de conduction et divisée par la valeur de l'inductance L. Cette formule considère que le courant dans l'inductance est nul avant chaque période de fonctionnement du dispositif de charge 123.

Le générateur de tension 125 impose alors une tension nulle ou n'impose pas de tension aux bornes du dispositif de charge 123 mis en fonctionnement aux bornes de l'étage 111 à charger.

La continuité du courant à travers l'inductance L est assurée par la cinquième diode D5 lorsque le générateur de tension 125 impose une tension nulle ou n'impose pas de tension à l'entrée du transformateur T.

Le courant à travers l'inductance L décroît proportionnellement à la tension appliquée à ses bornes. Le temps de tension nulle est dimensionné à une valeur suffisamment longue pour que le courant de l'inductance s'annule même lorsque la tension aux bornes de l'étage est minimale, ce qui correspond à la tension de fin de charge. Par exemple, le générateur de tension 125 impose une tension nulle ou n'impose pas de tension à l'entrée du transformateur T pendant un temps fixe de valeur supérieure au temps minimum correspondant à la tension minimale de fin de charge.

La polarité de la tension de sortie du générateur de tension 125 peut ensuite être inversée : une tension négative est appliquée entre les bornes v₊ et v₋ du générateur de tension 125.

Le courant traverse uniquement l'étage 111 en charge.

Le courant à travers les condensateurs C1 et C2 du dispositif de charge en fonctionnement est égal au courant à travers l'inductance L.

Pendant cette phase, la première diode D1 conduit, la deuxième diode D2 est bloquée. La troisième diode D3 est également bloquée.

Comme précédemment, de l'énergie est emmagasinée dans l'inductance L. Le courant à travers l'inductance L croît proportionnellement à la tension appliquée à ses bornes jusqu'à atteindre une valeur pic.

Cette valeur pic est égale approximativement à la tension appliquée aux bornes de l'inductance L lorsque le générateur de tension 125 fournit de l'énergie, multipliée par la valeur du temps de conduction et divisée par la valeur de l'inductance L. Comme précédemment, cette formule considère que le courant dans l'inductance est nul avant chaque période de fonctionnement du dispositif de charge 123.

À ce moment, le générateur de tension 125 n'impose pas de tension aux bornes du dispositif de charge 123 de l'étage 111.

La continuité du courant à travers l'inductance L est assurée par la cinquième diode D5 lorsque le générateur de tension 125 impose une tension nulle ou n'impose pas de tension à l'entrée du transformateur T.

Le courant à travers l'inductance L décroît proportionnellement à la tension appliquée à ses bornes. Le temps de tension nulle est dimensionné à une valeur suffisamment longue pour que le courant de l'inductance s'annule même lorsque la tension aux bornes de l'étage est minimale, ce qui correspond à la tension de fin de charge. Par exemple, le générateur de tension 125 impose une tension nulle ou n'impose pas de tension à l'entrée du transformateur T pendant un temps fixe de valeur supérieure au temps minimum correspondant à la tension minimale de fin de charge.

On comprend donc, qu'avec le jeu de convertisseurs 7 bidirectionnels ou le jeu des convertisseurs 107 monodirectionnels, on réalise un équilibrage entre les modules 13,113 puissant et rapide et on remplit en même temps une deuxième fonction d'alimentation du réseau basse tension 12V.

Du fait de la redondance de la pluralité des convertisseurs 7,107, on garantit l'alimentation du réseau basse tension alimentant notamment certaines fonctions vitales d'un véhicule automobile, et en plus on supprime la batterie auxiliaire 3,103. On assure un bon niveau de disponibilité et de sécurité pour l'alimentation des auxiliaires du véhicule.

En outre, le jeu de convertisseurs 7 bidirectionnels ou le jeu de convertisseurs 121 monodirectionnels, peut encore réaliser une troisième fonction d'équilibrage des étages d'accumulateur(s) 11.

Enfin, le jeu de convertisseurs monodirectionnels 107 et 121 permettent de transférer des ordres de grandeurs de puissance différents et peuvent être utilisés en même temps. Pour cette raison, les premiers 107 et seconds 121 convertisseurs monodirectionnels sont préférés aux convertisseurs bidirectionnels 7.

## Revendications

1. Système d'équilibrage de charge pour batterie de puissance (101) comportant un nombre prédéfini de modules (113) mis en série, un module (113) comportant au moins deux étages d'accumulateurs (111), un étage d'accumulateurs (111) comprenant au moins un accumulateur (109), **caractérisé en ce que** ledit système comporte :
- une pluralité de convertisseurs (107,121) isolés montés en parallèle respectivement connectés d'une part à un nombre prédéfini d'étages d'accumulateurs (111) associés, et d'autre part à un réseau basse tension d'alimentation d'auxiliaires électriques (A1,A2,A3,An) d'un véhicule automobile, sans batterie auxiliaire, dont :
• une pluralité de premiers convertisseurs (107) monodirectionnels respectivement connectés d'une part aux bornes d'un module (113), et d'autre part au réseau basse tension et
• une pluralité de seconds convertisseurs (121) monodirectionnels respectivement connectés d'une part au réseau basse tension et d'autre part aux bornes des étages d'accumulateurs (111) dudit module (113), et
- une unité de commande (14) desdits convertisseurs (107,121) configurée pour :
• commander au moins un premier convertisseur (107) de façon à amener le nombre prédéfini de modules (113) associés à un niveau de tension nominal, et pour commander un transfert d'énergie dans un premier sens (F1) de la batterie de puissance (101) vers ledit réseau basse tension via lesdits premiers convertisseurs (107), et pour
• commander au moins un second convertisseur (121) de façon à amener lesdits étages d'accumulateur (111) associés d'un module (113) à un niveau de tension nominal, et pour commander un transfert d'énergie dans un deuxième sens (F2) dudit réseau basse tension vers la batterie de puissance (101) via ledit au moins un second convertisseur (121), **en ce que**
- les premiers convertisseurs (107) monodirectionnels sont configurés pour alimenter le réseau basse tension d'alimentation d'auxiliaires électriques (A1,A2,A3,An) sans batterie auxiliaire et pour équilibrer l'état de charge des modules (113), et les seconds convertisseurs (121) monodirectionnels sont configurés pour équilibrer l'état de charge des étages (111) au sein des modules (113), et **en ce que**
- les premiers convertisseurs (107) et les seconds convertisseurs (121) monodirectionnels sont configurés pour transférer des puissances d'ordres de grandeur différents, les premiers convertisseurs (107) monodirectionnels étant configurés pour transférer une plus grande puissance que les seconds convertisseurs (121) monodirectionnels.

2. Système d'équilibrage selon la revendication précédente qui est configuré pour transférer de l'énergie d'un des modules (113) vers ledit au moins un étage dudit module (113) via lesdits premiers (107) et seconds (121) convertisseurs, l'unité de commande étant configurée pour :
- commander au moins un des premiers convertisseurs (107) pour transférer de l'énergie du module (113) dans le premier sens (F1),
- définir au moins un étage (111) dudit module (113) à charger, et
- commander le second convertisseur (121) en parallèle de l'étage (111) à charger pour un transfert de l'énergie dans le deuxième sens (F2), de manière à transférer l'énergie dudit module (113) transférée audit premier convertisseur (107) vers ledit étage (111) à charger dudit module (113) via ledit second convertisseur (121).

3. Système d'équilibrage selon la revendication 1 qui est configuré pour transférer de l'énergie d'un premier module (113) vers un deuxième module (113), via lesdits premiers (107) et seconds (121) convertisseurs, l'unité de commande étant configurée pour :
- commander un des premiers convertisseurs (107) pour transférer de l'énergie du premier module (113) dans le premier sens (F1) vers ledit premier convertisseur (107),
- définir au moins le deuxième module (113) à charger, et pour
- commander au moins un second convertisseur associé audit deuxième module (113) pour un transfert de l'énergie dans le deuxième sens (F2), de manière à transférer l'énergie dudit premier module (113) transférée audit premier convertisseur (107) vers ledit deuxième module (113), via ledit second convertisseur (121).

4. Système d'équilibrage selon l'une quelconque des revendications précédentes dans lequel un des seconds convertisseurs (121) comporte une pluralité de dispositifs de charge (123) montés en parallèle et respectivement associés à un étage d'accumulateurs (111) de façon à charger ledit étage d'accumulateurs (111) associé.

5. Système d'équilibrage selon l'une quelconque des revendications précédentes qui comporte un moyen de protection (15,115) en cas de court-circuit comportant une pluralité de fusibles (17,117) entre lesdits premiers et seconds convertisseurs (107,121) et la batterie de puissance (1,101).

6. Système d'équilibrage selon la revendication 4 prise en combinaison avec la revendication 5 qui comporte une pluralité de fusibles (117) en sortie desdits dispositifs de charge (123), du côté de la batterie de puissance (101).

7. Système d'équilibrage selon l'une des revendications 5 ou 6 qui comporte une pluralité de diodes (119'), respectivement montées en série avec lesdits premiers convertisseurs (107), du côté du réseau basse tension.

8. Système d'équilibrage selon l'une des revendications 5 ou 6 qui comporte une pluralité de commutateurs bidirectionnels (19,119), respectivement montés en série avec lesdits premiers convertisseurs (107), du côté du réseau basse tension.

9. Système d'équilibrage selon la revendication précédente dans lequel lesdits commutateurs bidirectionnels (19,119) comportent respectivement deux transistors montés en opposition.

10. Système d'équilibrage selon l'une des revendications 5 ou 6 qui comporte :
- une pluralité de premiers commutateurs (127) monodirectionnels respectivement montés en série avec lesdits premiers convertisseurs (107), en sortie desdits premiers convertisseurs (107), et
- une pluralité de seconds commutateurs (129) monodirectionnels respectivement montés en série avec lesdits seconds convertisseurs (121), en entrée desdits seconds convertisseurs (121).

## Patentansprüche

1. Ladungsausgleichssystem für eine Leistungsbatterie (101), die eine vordefinierte Anzahl von in Reihe geschalteten Modulen (113) aufweist, wobei ein Modul (113) mindestens zwei Akkumulatorstufen (111) aufweist, wobei eine Akkumulatorstufe (111) mindestens einen Akkumulator (109) enthält, **dadurch gekennzeichnet, dass** das System aufweist:
- eine Vielzahl von isolierten Wandlern (107,121), die parallel geschaltet bzw. einerseits mit einer vordefinierten Anzahl von zugeordneten Akkumulatorstufen (111) und andererseits mit einem Niederspannungsnetz zur Versorgung von elektrischen Nebenaggregaten (A1,A2,A3,An) eines Kraftfahrzeugs verbunden sind, ohne Hilfsbatterie, darunter:
• eine Vielzahl erster monodirektionaler Wandler (107), die je einerseits mit den Klemmen eines Moduls (113) und andererseits mit dem Niederspannungsnetz verbunden sind, und
• eine Vielzahl zweiter monodirektionaler Wandler (121), die je einerseits mit dem Niederspannungsnetz und andererseits mit den Klemmen der Akkumulatorstufen (111) des Moduls (113) verbunden sind, und
- eine Steuereinheit (14) der Wandler (107,121), die konfiguriert ist um:
• mindestens einen ersten Wandler (107) derart zu steuern, dass die vordefinierte Anzahl von zugeordneten Modulen (113) auf einen Nennspannungspegel gebracht wird, und um eine Energieübertragung in einer ersten Richtung (F1) von der Leistungsbatterie (101) zum Niederspannungsnetz über die ersten Wandler (107) zu steuern, und
• mindestens einen zweiten Wandler (121) derart zu steuern, dass die zugeordneten Akkumulatorstufen (111) eines Moduls (113) auf einen Nennspannungspegel gebracht werden, und um eine Energieübertragung in einer zweiten Richtung (F2) vom Niederspannungsnetz zur Leistungsbatterie (101) über den mindestens einen zweiten Wandler (121) zu steuern,
dass
- die ersten monodirektionalen Wandler (107) konfiguriert sind, das Niederspannungsnetz zur Versorgung von elektrischen Nebenaggregaten (A1,A2,A3,An) ohne Hilfsbatterie zu versorgen und den Ladungszustand der Module (113) auszugleichen, und die zweiten monodirektionalen Wandler (121) konfiguriert sind, den Ladungszustand der Stufen (111) innerhalb der Module (113) auszugleichen,
und dass
- die ersten (107) und zweiten monodirektionalen Wandler (121) konfiguriert sind, Leistungen unterschiedlicher Größenordnungen zu übertragen, wobei die ersten monodirektionalen Wandler (107) konfiguriert sind, eine größere Leistung zu übertragen als die zweiten monodirektionalen Wandler (121).

2. Ausgleichssystem nach dem vorhergehenden Anspruch, das konfiguriert ist, Energie von einem der Module (113) zur mindestens einen Stufe des Moduls (113) über die ersten (107) und zweiten (121) Wandler zu übertragen, wobei die Steuereinheit konfiguriert ist, um:
- mindestens einen der ersten Wandler (107) zu steuern, um die Energie des Moduls (113) in der ersten Richtung (F1) zu übertragen,
- mindestens eine zu ladende Stufe (111) des Moduls (113) zu definieren, und
- den zweiten Wandler (121) parallel mit der zu ladenden Stufe (111) für eine Übertragung der Energie in der zweiten Richtung (F2) zu steuern, um die zum ersten Wandler (107) übertragene Energie des Moduls (113) zu der zu ladenden Stufe (111) des Moduls (113) über den zweiten Wandler (121) zu übertragen.

3. Ausgleichssystem nach Anspruch 1, das konfiguriert ist, Energie von einem ersten Modul (113) zu einem zweiten Modul (113) über die ersten (107) und zweiten (121) Wandler zu übertragen, wobei die Steuereinheit konfiguriert ist, um:
- einen der ersten Wandler (107) zu steuern, um Energie vom ersten Modul (113) in der ersten Richtung (F1) zum ersten Wandler (107) zu übertragen,
- mindestens das zweite zu ladende Modul (113) zu definieren, und um
- mindestens einen dem zweiten Modul (113) zugeordneten zweiten Wandler für eine Übertragung der Energie in der zweiten Richtung (F2) zu steuern, um die zum ersten Wandler (107) übertragene Energie des ersten Moduls (113) über den zweiten Wandler (121) zum zweiten Modul (113) zu übertragen.

4. Ausgleichssystem nach einem der vorhergehenden Ansprüche, wobei einer der zweiten Wandler (121) eine Vielzahl von Ladevorrichtungen (123) aufweist, die parallel geschaltet und je einer Akkumulatorstufe (111) zugeordnet sind, um die zugeordnete Akkumulatorstufe (111) zu laden.

5. Ausgleichssystem nach einem der vorhergehenden Ansprüche, das eine Schutzeinrichtung (15,115) im Fall eines Kurzschlusses aufweist, die eine Vielzahl von Sicherungen (17,117) zwischen den ersten und zweiten Wandlern (107,121) und der Leistungsbatterie (1,101) aufweist.

6. Ausgleichssystem nach Anspruch 4 in Kombination mit Anspruch 5, das eine Vielzahl von Sicherungen (117) am Ausgang der Ladevorrichtungen (123) auf der Seite der Leistungsbatterie (101) aufweist.

7. Ausgleichssystem nach einem der Ansprüche 5 oder 6, das eine Vielzahl von Dioden (119') aufweist, die mit den ersten Wandlern (107) auf der Seite des Niederspannungsnetzes in Reihe geschaltet sind.

8. Ausgleichssystem nach einem der Ansprüche 5 oder 6, das eine Vielzahl bidirektionaler Schalter (19,119) aufweist, die mit den ersten Wandlern (107) auf der Seite des Niederspannungsnetzes in Reihe geschaltet sind.

9. Ausgleichssystem nach dem vorhergehenden Anspruch, wobei die bidirektionalen Schalter (19,119) je zwei gegenphasig geschaltete Transistoren aufweisen.

10. Ausgleichssystem nach einem der Ansprüche 5 oder 6, das aufweist:
- eine Vielzahl erster monodirektionaler Schalter (127), die mit den ersten Wandlern (107) am Ausgang der ersten Wandler (107) in Reihe geschaltet sind, und
- eine Vielzahl zweiter monodirektionaler Schalter (129), die mit den zweiten Wandlern (121) am Eingang der zweiten Wandler (121) in Reihe geschaltet sind.

## Claims

1. Charge balancing system for a power battery (101) comprising a predefined number of modules (113) connected in series, a module (113) comprising at least two accumulator stages (111), an accumulator stage (111) comprising at least one accumulator (109), **characterized in that** said system comprises:
- a plurality of insulated converters (107, 121) mounted in parallel, respectively connected on the one hand to a predefined number of associated accumulator stages (111), and on the other hand to a low-voltage network supplying power to electrical auxiliaries (A1, A2, A3, An) of a motor vehicle, with no auxiliary battery, including:
• a plurality of first one-way converters (107) respectively connected on the one hand to the terminals of a module (113), and on the other hand to the low-voltage network, and
• a plurality of second one-way converters (121) respectively connected on the one hand to the low-voltage network and on the other hand to the terminals of the accumulator stages (111) of said module (113), and
- a control unit (14) for said converters (107, 121) configured to:
• control at least one first converter (107) so as to bring the predefined number of associated modules (113) to a nominal voltage level, and to control a transfer of energy in a first direction (F1) from the power battery (101) to said low-voltage network via said first converters (107), and to
• control at least one second converter (121) so as to bring said associated accumulator stages (111) of a module (113) to a nominal voltage level, and to control a transfer of energy in a second direction (F2) from said low-voltage network to the power battery (101) via said at least one second converter (121), and **in that**
- the first one-way converters (107) are configured to supply power to the low-voltage network supplying power to electrical auxiliaries (A1, A2, A3, An) with no auxiliary battery and to balance the state of charge of the modules (113), and the second one-way converters (121) are configured to balance the state of charge of the stages (111) within the modules (113), and **in that**
- the first one-way converters (107) and the second one-way converters (121) are configured to transfer powers of different orders of magnitude, the first one-way converters (107) being configured to transfer a greater power than the second one-way converters (121).

2. Balancing system according to the preceding claim, which is configured to transfer energy from one of the modules (113) to said at least one stage of said module (113) via said first (107) and second (121) converters, the control unit being configured to:
- control at least one of the first converters (107) to transfer energy from the module (113) in the first direction (F1),
- define at least one stage (111) of said module (113) to be charged, and
- control the second converter (121) in parallel with the stage (111) to be charged for a transfer of energy in the second direction (F2), so as to transfer the energy from said module (113) transferred to said first converter (107) to said stage (111) to be charged of said module (113) via said second converter (121).

3. Balancing system according to Claim 1, which is configured to transfer energy from a first module (113) to a second module (113), via said first (107) and second (121) converters, the control unit being configured to:
- control one of the first converters (107) to transfer energy from the first module (113) in the first direction (F1) to said first converter (107),
- define at least the second module (113) to be charged, and to
- control at least one second converter associated with said second module (113) for a transfer of energy in the second direction (F2), so as to transfer the energy from said first module (113) transferred to said first converter (107) to said second module (113), via said second converter (121).

4. Balancing system according to any one of the preceding claims, wherein one of the second converters (121) comprises a plurality of charging devices (123) mounted in parallel and respectively associated with an accumulator stage (111) so as to charge said associated accumulator stage (111).

5. Balancing system according to any one of the preceding claims, which comprises a short-circuit protection means (15, 115) comprising a plurality of fuses (17, 117) between said first and second converters (107, 121) and the power battery (1, 101).

6. Balancing system according to Claim 4 taken in combination with Claim 5, which comprises a plurality of fuses (117) at the output of the said charging devices (123), on the side of the power battery (101).

7. Balancing system according to one of Claims 5 and 6, which comprises a plurality of diodes (119'), respectively mounted in series with said first converters (107), on the side of the low-voltage network.

8. Balancing system according to one of Claims 5 and 6, which comprises a plurality of two-way switches (19, 119), respectively mounted in series with said first converters (107), on the side of the low-voltage network.

9. Balancing system according to the preceding claim, wherein said two-way switches (19, 119) respectively comprise two transistors mounted in opposition.

10. Balancing system according to one of Claims 5 and 6, which comprises:
- a plurality of first one-way switches (127) respectively mounted in series with said first converters (107), at the output of said first converters (107), and
- a plurality of second one-way switches (129) respectively mounted in series with said second converters (121), at the input of said second converters (121).
